(19) Europäisches Patentamt
European Patent Office
Office européen des brevets

(11) **EP 3 470 804 A1**

(12) **DEMANDE DE BREVET EUROPEEN**

(43) Date de publication:
**17.04.2019 Bulletin 2019/16**

(51) Int Cl.:
*G01J 3/10* $^{(2006.01)}$  *G01J 3/12* $^{(2006.01)}$

(21) Numéro de dépôt: **18199664.6**

(22) Date de dépôt: **10.10.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **12.10.2017 FR 1759565**

(71) Demandeur: **Commissariat à l'énergie atomique et aux énergies alternatives**
**75015 Paris (FR)**

(72) Inventeurs:
• **BOUTAMI, Salim**
**38100 GRENOBLE (FR)**
• **GLIERE, Alain**
**38000 GRENOBLE (FR)**

(74) Mandataire: **Brevalex**
**95, rue d'Amsterdam**
**75378 Paris Cedex 8 (FR)**

(54) **SOURCE DE RAYONNEMENT INFRAROUGE**

(57) L'invention concerne une source (100) comprenant une membrane, la membrane comprend :
- une couche émissive (130), comprenant une surface émissive (131),
- des moyens d'adaptation (121a, 121b, 121c, 121d), chaque moyen d'adaptation (121a, 121b, 121c, 121d) étant en regard d'une section de la surface émissive (131) différente, dite section émissive (132a, 132b, 132c, 132d), et avec laquelle il forme un ensemble émissif (134a, 134b, 134c, 134d) adapté pour réduire l'étendue spectrale du rayonnement infrarouge émis par la section émissive,
- une pluralité de moyens de chauffage (140a, 140b) de la couche émissive (130), les moyens de chauffage (140a, 140b) étant agencés de manière à imposer des variations relatives de température différentes d'une section émissive (132a, 132b, 132c, 132d) à l'autre.

Fig. 3

EP 3 470 804 A1

**EP 3 470 804 A1**

**Description**

**DOMAINE TECHNIQUE**

La présente invention concerne une source de rayonnement infrarouge.
En particulier, l'invention concerne une source de rayonnement infrarouge adaptée pour ajuster de manière dynamique la distribution en longueur d'onde du rayonnement infrarouge émis par ladite source.

**ART ANTÉRIEUR**

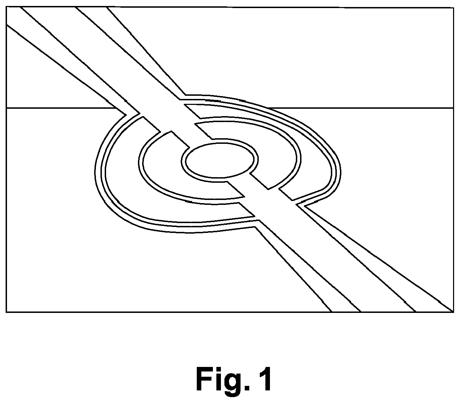

Les sources infrarouges non-dispersives (« NDIR » ou « Non-Dispersive InfraRed » selon la terminologie Anglo-Saxonne) sont connues de l'état de la technique, et sont couramment mises en oeuvre dans des détecteurs de gaz.
À titre d'exemple, la figure 1 illustre une micro-source infrarouge connue de l'état de la technique et décrite par Barritault et al. [1]. En particulier, la micro-source infrarouge comprend un filament métallique formé sur une membrane suspendue par deux bras de suspension.
Le filament métallique, lorsqu'il est parcouru par un courant électrique, chauffe et émet un rayonnement infrarouge selon la loi du corps noir.
Cependant, cette source infrarouge connue de l'état de la technique n'est pas satisfaisante.
En effet, une telle source émet généralement un spectre infrarouge large bande et nécessite donc la mise en oeuvre d'au moins un filtre ou des moyens de filtrage dès lors qu'un rayonnement infrarouge essentiellement monochromatique est requis, notamment pour la détection de gaz.
À cet égard, le document [2] cité à la fin de la description propose de mettre en oeuvre un agencement matriciel de plots métalliques disposés à proximité et en regard de la surface émissive de la source de rayonnement infrarouge permettant l'émission d'un spectre infrarouge étroit, avantageusement quasi-monochromatique à une longueur d'onde centrale $\lambda_0$. À cet égard, la longueur d'onde centrale $\lambda_0$ dépend de la taille desdits plots métalliques. Les plots métalliques peuvent être de forme ronde ou carrée, et disposés à proximité de la surface émissive.
De manière générale, les plots métalliques sont séparés de la surface émissive par une couche diélectrique présentant un indice de réfraction n à la longueur d'onde centrale $\lambda_0$, et une épaisseur E inférieure à $\lambda_0/10$. Par ailleurs, la plus grande dimension des plots est un multiple entier de $\lambda_0/2n$.
Une source de rayonnement infrarouge pourvue d'un tel agencement de plots métalliques permet l'émission d'un rayonnement infrarouge quasi-monochromatique, et isotrope, mais ne permet la détection que d'un seul gaz dès lors qu'elle est mise en oeuvre dans un détecteur de gaz. En d'autres termes, un détecteur de gaz mettant en oeuvre ce type de source doit être pourvu d'autant de sources de rayonnement qu'il y a de gaz à détecter.
De manière alternative, le document [3] cité à la fin de la description propose une source spectrale dispersée par la mise en oeuvre d'un réseau métallique disposé au niveau de la surface émissive d'une source infrarouge.
L'agencement proposé ne permet, cependant, d'émettre qu'un rayonnement infrarouge d'intensité limitée à la longueur d'onde d'intérêt, car restreint à un angle solide faible, et n'est donc pas non plus satisfaisant.
Le but de la présente invention est donc de proposer une source susceptible d'émettre un rayonnement infrarouge dont les intensités en fonction de la longueur d'onde sont ajustables de manière dynamique.

**EXPOSÉ DE L'INVENTION**

Le but de l'invention est au moins en partie atteint par une source de rayonnement infrarouge comprenant une membrane, la membrane comprenant :

- une couche émissive, comprenant une surface émissive, et destinée à émettre, lorsqu'elle est chauffée, un rayonnement infrarouge à partir de ladite surface émissive,
- une pluralité de moyens d'adaptation, chaque moyen d'adaptation étant en regard d'une section de la surface émissive différente, dite section émissive, et avec laquelle il forme un ensemble émissif adapté pour émettre un rayonnement infrarouge d'étendue spectrale réduite par rapport au rayonnement infrarouge susceptible d'être émis par la section émissive seule, et centrée autour d'une longueur d'onde centrale, ladite longueur d'onde centrale étant différente d'un ensemble émissif à l'autre,
- une pluralité de moyens de chauffage de la couche émissive, les moyens de chauffage étant agencés de manière à imposer des variations relatives de température différentes d'une section émissive à l'autre.

Selon un mode de mise en oeuvre, la couche émissive repose, par une face opposée à la surface émissive, sur un support mécanique.
Selon un mode de mise en oeuvre, la pluralité de moyens de chauffage comprend au moins deux pistes

2

métalliques qui, lorsqu'elles sont traversées par un courant, s'échauffent.

Selon un mode de mise en oeuvre, les deux pistes sont formées sur le support mécanique et à distance de la couche émissive.

Selon un mode de mise en oeuvre, les deux pistes métalliques sont parallèles entre elles, et encadrent la surface émissive.

Selon un mode de mise en oeuvre, le support mécanique est pourvu d'au moins deux pattes d'attache, avantageusement au moins quatre pattes d'attache.

Selon un mode de mise en oeuvre, les pattes d'attache sont également pourvues d'amenées de courant destinées à alimenter en courant les pistes métalliques.

Selon un mode de mise en oeuvre, une couche diélectrique présentant un indice de réfraction n et une épaisseur E est intercalée entre la pluralité de moyens d'adaptation et la couche émissive.

Selon un mode de mise en oeuvre, chaque moyen d'adaptation comprend au moins un plot métallique reposant sur la couche diélectrique, et dont la dimension w est un multiple entier de la longueur d'onde centrale associée à l'ensemble émissif considéré divisée par 2 fois l'indice de réfraction de la couche diélectrique à ladite longueur d'onde centrale.

Selon un mode de mise en oeuvre, chaque moyen d'adaptation est espacé de la surface émissive d'une distance inférieure au dixième de la longueur d'onde centrale associée à l'ensemble émissif considéré, et avantageusement supérieure au cinquantième de ladite longueur d'onde centrale.

Selon un mode de mise en oeuvre, pour chaque moyen d'adaptation, l'au moins un plot métallique comprend une pluralité de plots métalliques agencés de manière matricielle.

Selon un mode de mise en oeuvre, chaque moyen d'adaptation comprend le même nombre de plots métalliques.

Selon un mode de mise en oeuvre, l'au moins un plot métallique comprend une espèce métallique choisi parmi : platine, Or, Argent, Titane, Nitrure de Titane, Tungstène, Palladium, Tantale, Cuivre, Aluminium, Palladium, Molybdène.

Selon un mode de mise en oeuvre, chaque moyen d'adaptation comprend un filtre, avantageusement un filtre interférentiel.

Selon un mode de mise en oeuvre, les moyen d'adaptation sont alignés selon une direction A.

Selon un mode de mise en oeuvre, la couche émissive comprend une ou des tranchées traversantes séparant les sections émissives les unes des autres.

Selon un mode de mise en oeuvre, la source de rayonnement infrarouge est disposée dans une enceinte dont l'environnement est maintenu à une pression inférieure à $10^{-2}$ mbar, préférentiellement comprise entre $10^{-3}$ mbar et $10^{-2}$ mbar.

L'invention concerne également un détecteur de gaz mettant en oeuvre la source de rayonnement infrarouge selon la présente invention.

## BRÈVE DESCRIPTION DES DESSINS

D'autres caractéristiques et avantages apparaîtront dans la description qui va suivre des modes de réalisation de la source de rayonnement infrarouge, donnés à titre d'exemples non limitatifs, en référence aux dessins annexés dans lesquels :

- la figure 1 est une représentation schématique d'un élément résistif connu de l'état de la technique,
- la figure 2 est une représentation graphique de l'intensité du rayonnement infrarouge (axe vertical) en fonction de la longueur d'onde (axe horizontal) émis par un corps chauffé à 3000 K (courbe A), à 4000 K (courbe B) et à 5000 K (courbe C),
- la figure 3 est une représentation schématique de la source de rayonnement infrarouge, selon un plan de coupe perpendiculaire à la surface émissive, selon l'invention,
- les figures 4 et 5 sont des représentations schématiques de la source de rayonnement infrarouge, selon la face avant (surface émissive), selon l'invention,
- les figures 6a et 6b sont des représentations graphiques du gradient de température (axe verticale) en fonction de la position (axe horizontal) sur la surface émissive (selon l'axe X représenté aux figures 4 et 5) pour deux jeux de courants (I1, I2) différents,
- les figures 7a et 7b sont des représentations graphiques du gradient de températures obtenues selon les modalités des figures 6a et 6b, respectivement, mais en considérant des tranchées traversantes séparant les sections émissives les unes des autres,
- les figures 8a à 8d sont des représentations schématiques des distributions d'intensités relatives des raies d'émission centrées sur les longueurs d'ondes $\lambda_1$, $\lambda_2$, $\lambda_3$ et $\lambda_4$ pour différents jeux de valeurs de courants I1 et I2 circulant, respectivement, dans les pistes métalliques 140a et 140b, et en considérant I1 constant pour chacune de ces figures, et I2 augmentant d'une valeur très inférieure à I1 (figure 8a) à une valeur I2=I1,

- les figures 8e à 8h sont des représentations schématiques des distributions d'intensités relatives des raies d'émission centrées sur les longueurs d'ondes $\lambda_1$, $\lambda_2$, $\lambda_3$ et $\lambda_4$ pour différents jeux de valeurs de courants I1 et I2 circulant, respectivement, dans les pistes métalliques 140a et 140b, et en considérant I2 constant pour chacune de ces figures, et I1 diminuant d'une valeur I1=I2 (figure 8e) à une valeur I1 très inférieure à I2,

- la figure 9 est une représentation graphique des émissivités (axe vertical), en fonction de la longueur d'onde (axe horizontal, en $\mu$m), de premier, second, et troisième moyens d'adaptation, formés de plots métalliques de tailles, respectives, 800nm (courbe D), 1100 nm (courbe E), et 1400 nm (courbe F),

- la figure 10 est une représentation graphique de la distribution spectrale (axe vertical) en fonction de la longueur d'onde (axe horizontal) d'une source pourvue des trois moyens d'adaptation de la figure 9, et pour différents gradients de température,

- la figure 11 est une représentation graphique des émissivités (axe vertical) de différents ensembles émissifs, en fonction de la longueur d'onde (axe horizontal, en $\mu$m), chaque ensemble émissif comprenant un moyen d'adaptation fait d'une rangée de plots d'une taille donnée et perpendiculaire à la direction X, en particulier, l'ensemble des courbes est représentée pour des tailles de plots allant de 500 nm à 1500 nm par pas de 10 nm ;

- la figure 12 est une représentation graphique de la distribution spectrale (axe vertical) en fonction de la longueur d'onde (axe horizontal), pour différents gradients de température, d'une source pourvue de rangées de plots perpendiculaires à la direction X, les rangées de plots étant disposées par taille croissante des plots selon la direction X, ladite taille couvrant la gamme de tailles 500 nm - 1500 nm par pas de 10 nm.

## EXPOSÉ DÉTAILLÉ DE MODES DE RÉALISATION PARTICULIERS

L'invention décrite de manière détaillée ci-dessous met en oeuvre une source de rayonnement infrarouge qui comprend une pluralité de moyens d'adaptation disposés en regard d'une couche émissive destinée à émettre un rayonnement infrarouge lorsqu'elle est chauffée. En particulier, les moyens d'adaptation forment avec une section de la surface émissive, dite section émissive, un ensemble émissif adapté pour émettre un rayonnement infrarouge d'étendue spectrale réduite par rapport au rayonnement infrarouge susceptible d'être émis par la section émissive seule, et centrée autour d'une longueur d'onde centrale.

En d'autres termes, le rayonnement infrarouge d'étendue spectrale réduite couvre un domaine de longueurs d'ondes continu et réduit par rapport à celui émis par la section émissive seule. Il est donc entendu qu'un moyen d'adaptation, éventuellement en combinaison avec la section émissive qui lui est en regard, permet l'émission d'un rayonnement infrarouge filtré en longueurs d'ondes par rapport à celui qui est susceptible d'être émis par la section émissive seule.

Ladite longueur d'onde centrale est différente d'un ensemble émissif à l'autre.

La source comprend également une pluralité de moyens de chauffage de la couche émissive.

Les moyens de chauffage sont, en particulier, agencés pour pouvoir imposer un gradient de température modulable à la couche émissive. En d'autres termes, les moyens de chauffage sont agencés de manière à faire varier les distributions relatives en longueurs d'ondes du rayonnement infrarouge effectivement émises par chacun des ensembles émissifs.

La mise en oeuvre d'une telle source dans un détecteur de gaz confère audit détecteur la faculté de détecter plusieurs gaz (autrement dit aucune autre source n'est requise).

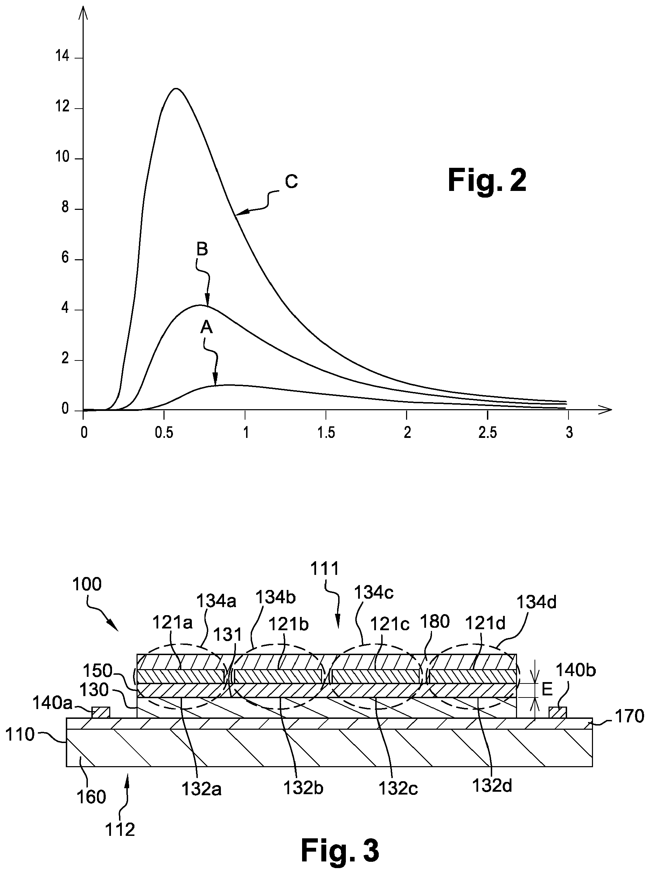

Sur les figures 3 à 5, on peut voir une source de rayonnement infrarouge 100 selon la présente invention.

La source de rayonnement infrarouge comprend une membrane 110.

Par « rayonnement infrarouge », on entend un rayonnement lumineux dans un domaine de longueurs d'ondes comprises entre 3 $\mu$m et 12 $\mu$m.

La membrane 110 comprend deux faces essentiellement parallèles dites, respectivement, face avant 111 et face arrière 112.

La membrane 110 comprend, de sa face avant 111 vers sa face arrière 112, une pluralité de moyens d'adaptation 121a, 121b, 121c, 121d et une couche émissive 130 (figure 3).

La couche émissive 130 comprend une surface émissive 131. En particulier, la couche émissive 130 est destinée à émettre un rayonnement infrarouge, à partir de sa surface émissive 131, lorsqu'elle est chauffée.

En effet, un corps, dans le cas présent la couche émissive 130, lorsqu'il est chauffé, émet un rayonnement infrarouge qui suit la loi de Planck. En particulier, la distribution en longueurs d'ondes (distribution spectrale) dudit rayonnement infrarouge est dépendante de la température imposée audit corps. À cet égard la figure 2 est une représentation graphique de l'intensité du rayonnement infrarouge (axe vertical) en fonction de la longueur d'onde (axe horizontal) d'un corps chauffé à 3000 K (courbe A), à 4000 K (courbe B) et à 5000 K (courbe C).

Une pluralité de sections émissives 132a, 132b, 132c, 132d (figure 3) est définie au niveau de la surface émissive 131. Les sections émissives 132a, 132b, 132c, 132d sont différentes les unes des autres. En d'autres termes, la surface émissive 131 est divisée en une pluralité de sections émissives 132a, 132b, 132c, 132d.

Il est ainsi entendu, sans qu'il soit nécessaire de le préciser, que dès lors qu'un rayonnement infrarouge est émis à partir de la surface émissive 131, il est également émis à partir des sections émissives.

La couche émissive 130 peut comprendre une espèce métallique, en particulier l'espèce métallique peut être choisie parmi : tungstène, Aluminium, Cuivre, Or, Argent, Tantale, Titane, Palladium, Molybdène, Platine, Nitrure de Titane.

La couche émissive 130 peut présenter une épaisseur comprise entre 10 nm et 200 nm.

Une épaisseur maximale de la couche émissive 130 de 200 nm limite la dégradation de la tenue mécanique de la membrane, ainsi que sa masse (en d'autres termes son inertie thermique).

En particulier, la couche émissive 130 peut comprendre une couche de platine (Pt), par exemple de 30 nm d'épaisseur, intercalée entre deux couches de nitrure de titane (TiN), par exemple de 10 nm d'épaisseur.

Chaque moyen d'adaptation 121a, 121b, 121c, 121d est en regard d'une section émissive 132a, 132b, 132c, 132d différente. Plus particulièrement, chaque moyen d'adaptation 121a, 121b, 121c, 121d forme, avec la section émissive 132a, 132b, 132c, 132d qui lui est en regard, un ensemble émissif 134a, 134b, 134c, 134d.

En particulier, chaque ensemble émissif 134a, 134b, 134c, 134d est adapté pour émettre un rayonnement infrarouge d'étendue spectrale réduite par rapport au rayonnement infrarouge susceptible d'être émis par la section émissive 132a, 132b, 132c, 132d seule, et centrée autour d'une longueur d'onde centrale.

Ladite longueur d'onde centrale est différente d'un ensemble émissif à l'autre.

En d'autres termes, chaque ensemble émissif 134a, 134b, 134c, 134d est adapté pour émettre un rayonnement infrarouge dans une gamme de longueurs d'ondes différente d'un ensemble émissif à l'autre (il est donc entendu que chaque ensemble émissif est associé à une longueur d'onde centrale donnée. Par ailleurs tout au long de la description, il pourra être considéré que la longueur d'onde centrale peut être aussi bien associée à un ensemble émissif qu'au moyen d'adaptation qui le compose).

La membrane 110 comprend également une pluralité de moyens de chauffage 140a, 140b (figure 3).

Les moyens de chauffage 140a, 140b sont destinés à chauffer la couche émissive 130.

En particulier, les moyens de chauffage 140a, 140b sont agencés de manière à pouvoir imposer un gradient de température à la couche émissive 130 selon la surface émissive 131 de sorte que la température, notamment la température moyenne, soit différente d'une section émissive à l'autre. Ainsi, dès lors que chaque section émissive 132a, 132b, 132c, 132d présente une température différente, le spectre d'émission infrarouge diffère d'une surface émissive à l'autre.

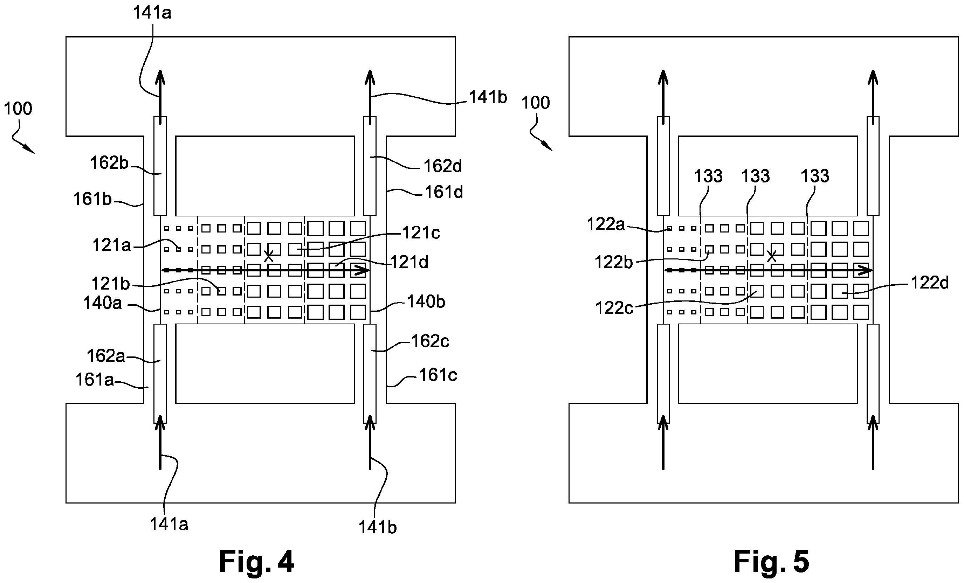

Des tranchées traversantes 133 peuvent être formées dans la couche émissive 130 de manière à séparer les sections émissives 132a, 132b, 132c, 132d les unes des autres (figure 5).

La pluralité de moyens 140a, 140b (figure 4) de chauffage peut comprendre au moins deux pistes métalliques qui, lorsqu'elles sont traversées par un courant, s'échauffent. Il est entendu, sans qu'il soit nécessaire de le préciser, que les pistes métalliques sont également connectées à des moyens générateurs de courant. Lesdits moyens générateur de courant 141a, 141b peuvent être des sources de courant, avantageusement des sources de courant pilotées permettant de faire varier le courant traversant chacune des pistes métalliques.

La couche émissive peut reposer, par une face opposée à la surface émissive 131, sur un support mécanique 160 (figure 3). Dans ce cas, les pistes métalliques 140a, 140b peuvent être formées sur ou dans le support mécanique, et de préférence à distance de la couche émissive. De manière complémentaire, une couche diélectrique support 170 (figure 3) peut être intercalée entre le support mécanique 160 et la couche émissive 130.

De manière avantageuse, les moyens de chauffage 140a et 140b comprend deux pistes métalliques 140a et 140b essentiellement parallèles entre elles et qui encadrent la surface émissive.

Par « encadrer la surface émissive », on entend deux pistes métalliques 140a et 140b positionnées de part et d'autre de la surface émissive.

Le support mécanique peut comprendre un matériau semi-conducteur, par exemple du silicium, ou du nitrure de Silicium. Il est cependant entendu que l'invention n'est pas limitée à ce type de matériau.

Les pistes métalliques 140a et 140b peuvent comprendre au moins un élément métallique choisi parmi : platine, Or, Argent, Titane, Nitrure de Titane, Tungstène, Palladium, Tantale, Cuivre, Aluminium, Palladium, Molybdène.

Le support mécanique peut être pourvu d'au moins deux pattes d'attache 161a, 161b, 161c, 161d (figure 4). De manière avantageuse, les pattes d'attache 161a, 161b, 161c, 161d sont également pourvues d'amenées de courant 162a, 162b, 162c, 162d (figure 4) destinées à alimenter en courant les pistes métalliques 140a, 140b.

Dès lors que seules deux pattes d'attache sont considérées, chacune d'entre elle peut être pourvue de deux amenées de courant 162a, 162b, 162c, 162d. Selon cette configuration, deux amenées de courant disposées sur une patte d'attache sont, avantageusement, suffisamment larges afin de ne pas générer un échauffement trop important desdites pattes et limiter les échanges thermiques entre lesdites amenées.

Quatre pattes d'attache, dès lors que chacune comprend une et une seule amenée de courant, permet d'obtenir des gradients de température plus importants au niveau de la membrane, mais également de limiter, voire prévenir, les échanges thermiques entre les différentes amenées de courant.

Une couche diélectrique 150 (figure 3) présentant un indice de réfraction n et une épaisseur E peut être intercalée entre la pluralité de moyens d'adaptation 121a, 121b, 121c, 121d et la couche émissive 130. En d'autres termes, la couche diélectrique repose sur la surface émissive 131.

La couche diélectrique 150 peut comprendre un empilement de couches de matériaux diélectriques.

En particulier, chaque couche de matériau diélectrique peut comprendre au moins un des éléments choisi parmi : nitrure de silicium, dioxyde de silicium.

Par exemple, le couche diélectrique 150 peut comprendre un empilement d'une couche d'oxyde de silicium, et une couche de nitrure de silicium, de 100 nm d'épaisseur chacune.

Selon un premier mode de réalisation, les moyens d'adaptation 121a, 121, 121c et 121d sont des filtres, avantageusement des filtres interférentiels.

Le choix des types de filtres interférentiels ainsi que leur mise en oeuvre sont à la portée de l'homme du métier et ne sont donc pas décrits plus en détails.

Selon un second mode de réalisation, les moyens d'adaptation 121a, 121, 121c et 121d sont des résonateurs plasmoniques métal-isolant-métal (« MIM »).

En particulier, un résonateur plasmonique peut comprendre au moins un plot métallique 122a, 122b, 122c, 122d reposant sur la couche diélectrique 150 (figure 5).

Les plots métalliques, pour un moyen d'adaptation donné, peuvent présenter une dimension w qui est un multiple entier de la longueur d'onde centrale $\lambda_i$ associée à l'ensemble émissif considéré divisée par 2 fois l'indice de réfraction n de la couche diélectrique à ladite longueur d'onde centrale ($w=m\lambda_i/(2n)$, m étant un entier positif non nul).

Ainsi, la longueur d'onde centrale associée à un ensemble émissif comprenant un ou plusieurs plots métalliques est déterminée par la dimension w du ou desdits plots métalliques.

Il est par ailleurs clair que, dès lors que chaque ensemble émissif est associé à une longueur d'onde centrale $\lambda_i$ différente de celle des autres ensembles émissifs, l'au moins un plot métallique d'un moyen d'adaptation est d'une dimension w différente de celle de l'au moins un plot des autres moyens d'adaptation.

Par « dimension d'un plot », on entend la plus grande dimension du plot autre que son épaisseur. Par exemple, la plus grande dimension d'un plot rectangulaire est sa longueur, la plus grande dimension d'un plot carré est son côté, et celle d'un cercle est son diamètre.

Il est par ailleurs clair que l'épaisseur d'un plot métallique est sa dimension selon une direction perpendiculaire à la surface sur laquelle il repose.

L'épaisseur des plots métalliques peut être comprise en 50 nm et 200 nm.

Par ailleurs, chaque moyen d'adaptation 121a, 121b, 121c, 121d est espacé de la surface émissive 131 d'une distance inférieure au dixième de la longueur d'onde centrale $\lambda_i$ du moyen d'adaptation considéré, et avantageusement supérieure au cinquantième de la longueur d'onde centrale du moyen d'adaptation considéré.

En outre, dès lors qu'un moyen d'adaptation 121a, 121b, 121c, 121d comprend une pluralité de plots métalliques, ces derniers peuvent être agencés de manière matricielle.

Par « agencés de manière matricielle », on entend un arrangement des plots métalliques régulier et périodique selon deux directions perpendiculaires du plan formé par la surface émissive 131.

Chaque moyen d'adaptation 121a, 121b, 121c, 121d peut comprendre le même nombre de plots métalliques 122a, 122b, 122c, 122d.

Chaque plot métallique 122a, 122b, 122c, 122d peut comprendre une espèce métallique choisi parmi : platine, Or, Argent, Titane, Nitrure de Titane, Tungstène, Palladium, Tantale, Cuivre, Aluminium, Palladium, Molybdène.

Les plots métalliques 122a, 122b, 122c, 122d peuvent être recouverts d'une couche diélectrique protectrice 180 afin de prévenir leur oxydation si nécessaire.

La source de rayonnement infrarouge peut être disposée dans une enceinte dont l'environnement est maintenu à une pression inférieure à $10^{-2}$ mbar, préférentiellement comprise entre $10^{-3}$ mbar et $10^{-2}$ mbar.

Selon l'un ou l'autre des modes de réalisation, les moyens d'adaptation peuvent être alignés selon une direction X (figures 4 et 5). En particulier, dès lors que les pistes métalliques 140a, 140b sont essentiellement parallèles, la direction X est perpendiculaire auxdites pistes.

En fonctionnement, les moyens de chauffage, et en particulier les pistes métalliques 140a et 140b, permettent d'imposer un gradient de température ajustable à la couche émissive 130.

À titre d'illustration, les inventeurs ont réalisé des simulations thermiques (par éléments finis, à l'aide du logiciel COMSOL) afin d'évaluer, en fonction de couples de courants (I1, I2) circulant dans les pistes métalliques, le gradient de température s'établissant selon l'axe X (figures 4 et 5).

Pour ces simulations, la source de rayonnement infrarouge reprend la géométrie illustrée aux figures 4 et 5. En particulier, la couche émissive 130 comprend une couche de platine de 30 nm d'épaisseur intercalée entre deux couches de TiN de 10 nm d'épaisseur. La source de rayonnement infrarouge peut également comprendre une couche diélectrique 150 faite d'un empilement comprenant une couche de $SiO_2$ et une couche de $Si_3N_4$ de 100 nm d'épaisseur chacune.

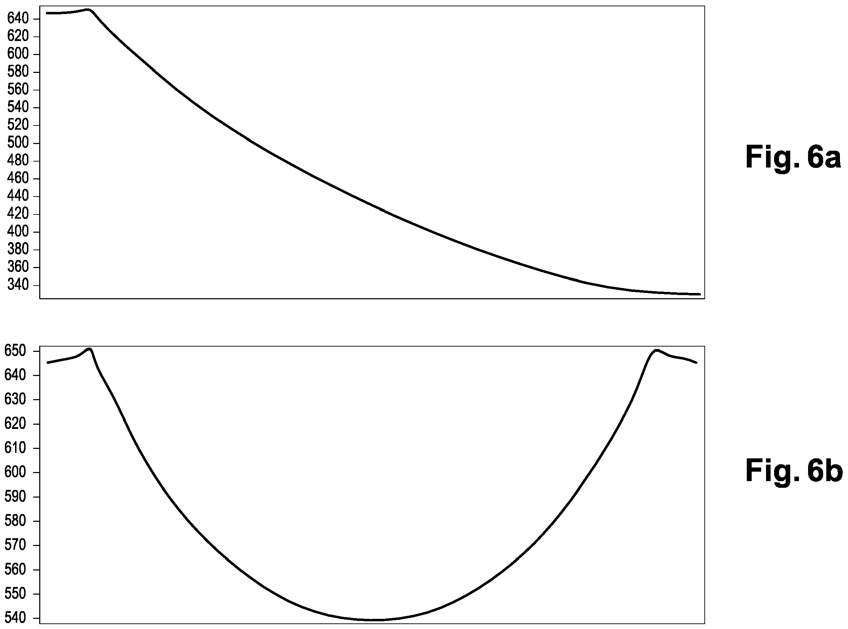

Les résultats des simulations, pour 2 jeux de courants (I1, I2) différents, sont représentés aux figures 6a et 6b.

En particulier, le courant I1 du premier jeu de courant (figure 6a) est ajusté pour imposer une température égale à 650°C sur le côté gauche de la surface émissive des figures 4 et 5. Le courant I2 est quant à lui nul si bien que, selon la simulation, la température du côté droit de la surface émissive des figures 4 et 5 est égale à 330°C.

Les courants I1 et I2 du second jeu de courants (I1, I2) sont égaux, et ajustés chacun pour imposer une température égale à 650°C sur les côtés gauche et droite de la surface émissive des figures 4 et 5. Le résultat de la simulation, représentée à la figure 6b, montre très clairement qu'un autre profil de température peut être obtenu, avec un gradient plus faible.

Il est ainsi démontré que les moyens de chauffage peuvent imposer un gradient de température sur la surface émissive de sorte que chaque section émissive présente une température différente des autres surfaces émissives. De cette manière, chaque section émissive peut émettre un rayonnement infrarouge dont la distribution en longueurs d'ondes est différente de celles des autres sections émissives (par distribution en longueur d'onde on entend le poids représenté par chaque longueur d'onde dans le spectre effectivement émis).

Il est néanmoins possible d'amplifier le gradient de température d'une section émissive à l'autre en formant des tranchées traversantes dans la couche émissive entre chaque section émissives.

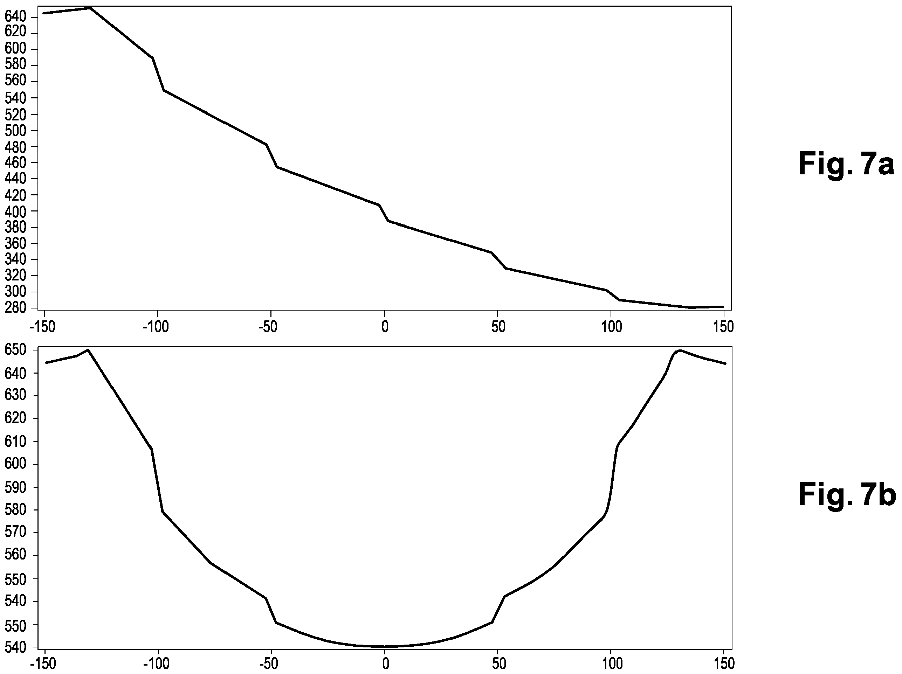

Les figures 7a et 7b représentent les résultats de simulations thermiques selon les mêmes modalités, respectivement, des figures 6a et 6b mais en considérant des tranchées formées entre les sections émissives.

Sur les figures 7a et 7b, des décrochements du gradient de température sont très clairement observés à l'endroit des tranchées traversantes (ces dernières générant une rupture de pont thermique, ou une résistance thermique). Par ailleurs, le gradient de température observé dans le cas de la figure 7a est plus important que celui de la figure 6a.

Dans le cas de la figure 7b, les courants I1 et I2 sont égaux, et le gradient de température observé est là encore supérieur à celui observé à la figure 6b.

Eu égard à ce qui précède, en fonctionnement, la source 100 peut émettre un rayonnement infrarouge composé des « raies d'émission » discrètes, et dont les intensités relatives dépendent de la quantité de chaleur fournie par les moyens de chauffage à la couche émissive 130. En particulier, les « raies d'émission » discrètes sont chacune centrées sur une longueur d'onde centrale $\lambda_i$.

A titre d'illustration, nous considérons la source de rayonnement infrarouge de la figure 4, qui comprend 4 des moyens d'adaptation de longueur d'onde centrale respective $\lambda_1$, $\lambda_2$, $\lambda_3$ et $\lambda_4$. Dans cet exemple, les moyens d'adaptation 121a, 121b, 121c, 121d mis en oeuvres correspondent au second mode de réalisation, et sont alignés selon une direction X perpendiculaire à deux pistes métalliques 140a, 140b parallèles entre elles. Toujours dans cet exemple, on note I1 le courant circulant dans la piste métallique 140a, et I2 le courant circulant dans la piste métallique 140b.

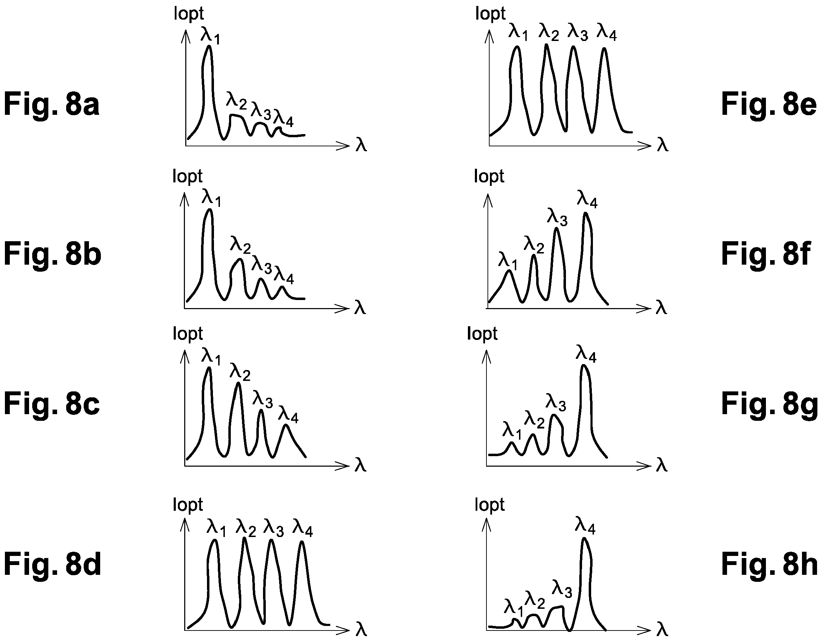

Les figures 8a à 8h correspondent alors aux distributions d'intensités relatives des raies d'émission centrées sur les longueurs d'ondes $\lambda_1$, $\lambda_2$, $\lambda_3$ et $\lambda_4$ pour différents jeux de valeurs de courants I1 et I2 circulant, respectivement, dans les pistes métalliques 140a et 140b.

En particulier, les distributions d'intensités des figures 8a à 8d sont obtenues pour un courant I1 constant, et un courant I2 augmentant progressivement d'une valeur très inférieure à I1, voire nulle, (figure 8a) à une valeur égale à I1 (figure 8d).

Les distributions d'intensités des figures 8e à 8h sont obtenues pour un courant I2 constant, et un courant I1 diminuant progressivement d'une valeur égale à I2 (figure 8e) à une valeur très inférieure à I2, voire nulle, (figure 8d).

Ainsi, on observe clairement lorsque le courant I2 augmente (avec I1 constant, figures 8a à 8d) que l'intensité des raies associées aux longueurs d'ondes centrales $\lambda_2$, $\lambda_3$ et $\lambda_4$ augmente, jusqu'à atteindre une intensité proche de la raie associée à la longueur d'onde $\lambda_1$.

On observe également lorsque le courant I1 diminue (avec I2 constant, figures 8e à 8h) que l'intensité des raies associées aux longueurs d'ondes centrales $\lambda_1$, $\lambda_2$ et $\lambda_3$ diminuent.

Cet effet peut avantageusement être mis à profit pour la détection de gaz de natures différentes. En particulier, la détection de gaz peut être mise en oeuvre par un détecteur comprenant la source de rayonnement infrarouge et un capteur optique (par exemple un pyromètre).

Il est également entendu que le détecteur comprend une enceinte dans laquelle peut circuler le ou les gaz. Ledit détecteur comprend alors ladite source ainsi qu'un capteur optique (par exemple un pyromètre).

La mise en oeuvre de la détection de gaz par un tel détecteur nécessite une procédure de mesure et de traitement du signal appropriée que nous décrivons ci-après.

À titre d'exemple, considérons 4 gaz tel que décrit dans le tableau suivant.

| Gaz | Longueur d'onde d'absorption | Concentration | Coefficient d'absorption |
|-----|------------------------------|---------------|--------------------------|
| Gaz 1 | $\lambda 1$ | C1 | $\alpha 1$ |
| Gaz 2 | $\lambda 2$ | C2 | $\alpha 2$ |

(suite)

| Gaz | Longueur d'onde d'absorption | Concentration | Coefficient d'absorption |
|---|---|---|---|
| Gaz 3 | $\lambda 3$ | C3 | $\alpha 3$ |
| Gaz 4 | $\lambda 4$ | C4 | $\alpha 4$ |

On considère, dans cet exemple une source de rayonnement infrarouge qui comprend 4 moyens d'adaptation de longueur d'onde centrale respective $\lambda_1$, $\lambda_2$, $\lambda_3$ et $\lambda_4$.

4 mesures pour 4 jeux de courants (I1, I2) différents sont alors effectuées. Pour chacune des mesures, les puissances optiques Pi (i= 1, 2, 3 ou 4) mesurées par le capteur optique vérifient les relations suivantes :

$$P_1 = P_{bck1} + a_{11}e^{-\alpha_1 C_1 L} + a_{12}e^{-\alpha_2 C_2 L} + a_{13}e^{-\alpha_3 C_3 L} + a_{14}e^{-\alpha_4 C_4 L} \quad (1)$$

$$P_2 = P_{bck2} + a_{21}e^{-\alpha_1 C_1 L} + a_{22}e^{-\alpha_2 C_2 L} + a_{23}e^{-\alpha_3 C_3 L} + a_{24}e^{-\alpha_4 C_4 L} \quad (2)$$

$$P_3 = P_{bck3} + a_{31}e^{-\alpha_1 C_1 L} + a_{32}e^{-\alpha_2 C_2 L} + a_{33}e^{-\alpha_3 C_3 L} + a_{34}e^{-\alpha_4 C_4 L} \quad (3)$$

$$P_4 = P_{bck4} + a_{41}e^{-\alpha_1 C_1 L} + a_{42}e^{-\alpha_2 C_2 L} + a_{43}e^{-\alpha_3 C_3 L} + a_{44}e^{-\alpha_4 C_4 L} \quad (4)$$

Les termes Pbcki (i= 1, 2, 3 ou 4), supposés connus, désignent la puissance de fond du signal (à savoir la puissance non absorbée par les gaz). Cette puissance de fond est aussi liée au fait que l'émissivité des MIMs ne tombe pas parfairement à 0 en dehors de leur longueur d'onde de résonance. Elle peut varier d'un profil de température à l'autre, car la luminance totale de la source de rayonnement infrarouge peut varier.

Les coefficients aij, supposés connus, désignent simplement les taux de luminance de la source de rayonnement infrarouge pour chaque canal j (j= 1, 2, 3 ou 4) de longueur d'onde, et pour chaque mesure i (correspondant à un jeu de courant I1, I2).

Les équations (1), (2), (3) et (4) peuvent être réécrites sous forme matricielle :

$$\begin{pmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{pmatrix} \begin{pmatrix} e^{-\alpha_1 C_1 L} \\ e^{-\alpha_2 C_2 L} \\ e^{-\alpha_3 C_3 L} \\ e^{-\alpha_4 C_4 L} \end{pmatrix} = \begin{pmatrix} P_1 - P_{bck1} \\ P_2 - P_{bck2} \\ P_3 - P_{bck3} \\ P_4 - P_{bck4} \end{pmatrix}$$

L'inversion du système matriciel précédemment décrit permet alors de connaître les valeurs des concentrations C1, C2, C3, et C4.

L'algorithme présenté ne constitue pas une limitation de la présente invention, et toute méthode mathématique connue de l'homme du métier et susceptible de répondre au besoin de détermination des concentrations des gaz à partir d'un jeu de mesures d'absorptions peut alors être considérée.

Nous notons, par ailleurs, qu'il peut être envisagé d'exécuter plus de mesures qu'il n'y a d'inconnues. La méthode de résolution du système d'équations précédemment décrit pourra alors être également combinée à une méthode des moindres carrés.

Les grandeurs Pbcki (i= 1, 2, 3 ou 4), et aij (i= 1, 2, 3 ou 4, et i= 1, 2, 3 ou 4) peuvent être déduites des simulations optiques.

De manière alternative, ces grandeurs peuvent également être obtenues par une procédure de calibration du détecteur décrite ci-après.

Pour la description de cette procédure, on considère toujours le dispositif de la figure 4.

Ainsi, un premier jeu de courants (I1,I2), circulant respectivment dans les pistes métalliques 140a et 140b est, dans un premier temps, considéré.

Il résulte de l'application de ce premier jeu de courant (I1, I2) un premier profil de température de la surface émissive conduisant. La surface émissive soumise à ce premier profil de température émet alors un rayonnement infrarouge dont la puissance, dite première puissance, est mesurée au niveau du capteur, et vérifie la relation suivante :

$$P_1 = P_{bck1} + a_{11}e^{-\alpha_1 C_1 L} + a_{12}e^{-\alpha_2 C_2 L} + a_{13}e^{-\alpha_3 C_3 L} + a_{14}e^{-\alpha_4 C_4 L}$$

Les paramètres Pbckl, a11, a12, al3, a14 peuvent être déterminés par des mesures d'absorption de gaz connus et dont les concentrations sont également connues.

En particulier, au moins 5 jeux de gaz de concentions différentes et connues peuvent être considérés (Cla,C2a,C3a,C4a,C5a), (C1b, C2b,C3b,C4b,C5b), (Clc,C2c,C3c,C4c,C5c), (Cld,C2d,C3d,C4d,C5d) et (Cle, C2e,C3e,C4e,C5e).

Ainsi, pour le premier jeu de courants (I1, I2), et pour ces 5 jeux différents de concentrations, les puissances suivantes sont mesurées au niveau du capteur :

$$P_{1a} = P_{bck1} + a_{11}e^{-\alpha_1 C_{1a} L} + a_{12}e^{-\alpha_2 C_{2a} L} + a_{13}e^{-\alpha_3 C_{3a} L} + a_{14}e^{-\alpha_4 C_{4a} L}$$

$$P_{1b} = P_{bck1} + a_{11}e^{-\alpha_1 C_{1b} L} + a_{12}e^{-\alpha_2 C_{2b} L} + a_{13}e^{-\alpha_3 C_{3b} L} + a_{14}e^{-\alpha_4 C_{4b} L}$$

$$P_{1c} = P_{bck1} + a_{11}e^{-\alpha_1 C_{1c} L} + a_{12}e^{-\alpha_2 C_{2c} L} + a_{13}e^{-\alpha_3 C_{3c} L} + a_{14}e^{-\alpha_4 C_{4c} L}$$

$$P_{1d} = P_{bck1} + a_{11}e^{-\alpha_1 C_{1d} L} + a_{12}e^{-\alpha_2 C_{2d} L} + a_{13}e^{-\alpha_3 C_{3d} L} + a_{14}e^{-\alpha_4 C_{4d} L}$$

$$P_{1e} = P_{bck1} + a_{11}e^{-\alpha_1 C_{1e} L} + a_{12}e^{-\alpha_2 C_{2e} L} + a_{13}e^{-\alpha_3 C_{3e} L} + a_{14}e^{-\alpha_4 C_{4e} L}$$

L'écriture sous forme matricielle des équations précédemment établies permet de déterminer les paramètres Pbck1, a11, a12, a13, a14 :

$$\begin{pmatrix} P_{bck1} \\ a_{11} \\ a_{12} \\ a_{13} \\ a_{14} \end{pmatrix} = \begin{pmatrix} 1 & e^{-\alpha_1 C_{1a} L} & e^{-\alpha_2 C_{2a} L} & e^{-\alpha_3 C_{3a} L} & e^{-\alpha_4 C_{4a} L} \\ 1 & e^{-\alpha_1 C_{1b} L} & e^{-\alpha_2 C_{2b} L} & e^{-\alpha_3 C_{3b} L} & e^{-\alpha_4 C_{4b} L} \\ 1 & e^{-\alpha_1 C_{1c} L} & e^{-\alpha_2 C_{2c} L} & e^{-\alpha_3 C_{3c} L} & e^{-\alpha_4 C_{4c} L} \\ 1 & e^{-\alpha_1 C_{1d} L} & e^{-\alpha_2 C_{2d} L} & e^{-\alpha_3 C_{3d} L} & e^{-\alpha_4 C_{4d} L} \\ 1 & e^{-\alpha_1 C_{1e} L} & e^{-\alpha_2 C_{2e} L} & e^{-\alpha_3 C_{3e} L} & e^{-\alpha_4 C_{4e} L} \end{pmatrix}^{-1} \begin{pmatrix} P_{1a} \\ P_{1b} \\ P_{1c} \\ P_{1d} \\ P_{1e} \end{pmatrix}$$

L'opération peut alors être réitérée plusieurs fois en considérant d'autres jeux de courants (I1, I2) afin de déterminer les autres paramètres.

D'un point vue pratique, il peut être, cependant, plus simple de considérer le premier jeu de concentrations de gaz puis d'appliquer successivement les différents jeux de courants (I1, I2). Les équations peuvent alors être constituées à la toute fin des mesures (jeux de courant et jeux de concentrations).

Les différents jeux de concentrations de gaz peuvent consister par exemple en :

- aucun gaz présent dans l'enceinte (Cia=0 pour tout i),
- tous les gaz présents, avec des concentrations telles que les produits $\alpha i.Cib$ soient égaux pour tout i,
- un seul gaz présent à la fois dans l'enceinte, à la même concentration qu'au jeu précédent (on permute alors chaque gaz).

Ces types de jeux permettent d'aboutir à un système d'équations très bien déterminé.

Tous les paramètres Pbcki, et aij peuvent être ainsi déterminés, puis utilisés dans le modèle de détermination de concentrations de gaz présenté précédemment.

Les inventeurs ont également pu démontrer par simulation numérique qu'un détecteur de gaz comprenant la source de rayonnement infrarouge présentait une sensibilité suffisante pour détecter les gaz et déterminer leur concentration.

Les inventeurs ont également simulé selon la méthode RCWA ("Rigorous coupled-wave analysis" selon la terminologie Anglo-Saxonne) la distribution spectrale d'une source donnée pour différents couples de courants I1, I2.

La source considérée pour la simulation RCWA comprend trois moyen d'adaptation dits, respectivement, premier moyen d'adaptation, second moyen d'adaptation et troisième moyen d'adaptation , et présentant, respectivement les longueurs d'ondes centrales de $4,2\mu m$, $5,25\mu m$, et $6,15\mu m$. Ces longueurs d'onde centrales permettent de détecter les gaz $CO_2$, NO et $NO_2$.

Les premier, second, et troisième moyen d'adaptation comprennent des tailles de plots métalliques de tailles respectives 800nm, 1100nm, et 1400nm (pour chaque moyen d'adaptation, les plots métalliques sont agencés de manière matricielle selon une période de $2,5\mu lm$).

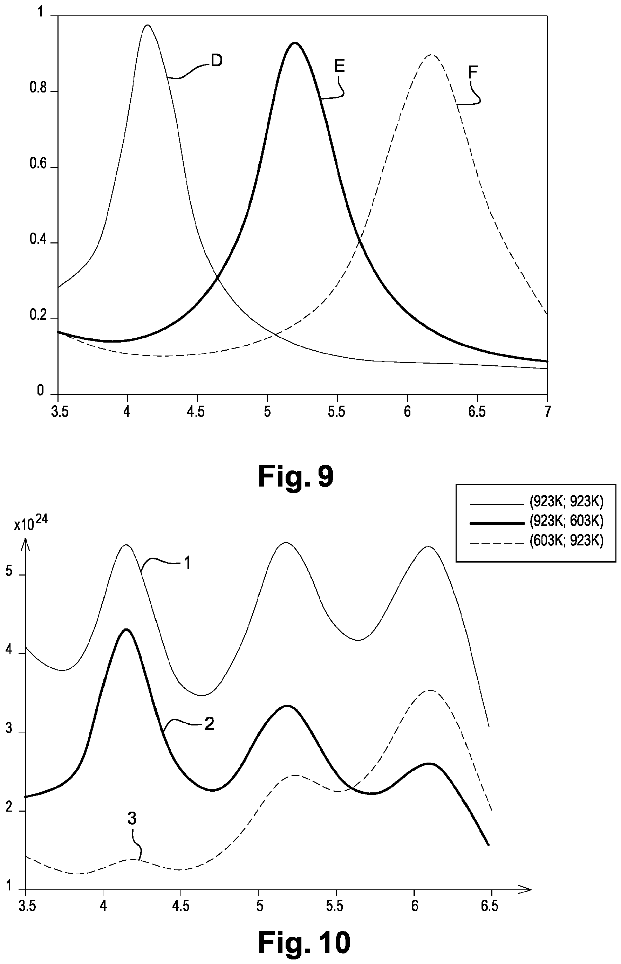

Les émissivités des premiers, second, et troisième moyen d'adaptation sont représentées, respectivement, par les courbes D, E, et F sur la figure 9.

Pour un profil de température donnée, le produit de la loi de Planck spectrale multipliée par l'émissivité de chaque moyen d'adaptation permet de calculer la distribution spectrale.

En particulier, la figure 10 est une représentation graphique de la distribution spectrale de la source (pourvue des trois moyens d'adaptation précédemment décrits) pour différents gradients de températures décrits dans le tableau suivant.

|  | Température gauche (K) | Température droite (K) |
|---|---|---|
| **Courbe 1** | 923 | 923 |
| **Courbe 2** | 923 | 603 |
| **Courbe B** | 603 | 923 |

Sur la courbe 1, on peut observer 3 pics d'amplitude quasi équivalente pour chacune des trois longueurs d'onde.

Cependant, dès lors que la couche émissive est soumise à un gradient de température (courbes 2 et 3), on peut observer une variation relative des différents pics.

Par ailleurs le fond continu peut être observé sur chacune des courbes 1, 2, et 3.

Il est possible de compenser ces effets en homogénéisant la température à une valeur plus faible que 923K, typiquement 800K, et en dissymétrisant les gradients de température à des valeurs différentes. Cela est intéressant visuellement, pour comparer les gabarits spectraux, mais n'est pas strictement requis pour le traitement de signal.

Toujours dans le cadre de la présente invention, et en particulier en relation avec le second mode de réalisation, il peut être considéré un gradient continu des plots métalliques (en d'autres termes un agencement de moyens d'adaptation dont les longueurs d'onde centrales varient continument). A titre d'exemple, il peut s'agir de rangées de plots métalliques, chaque rangée étant perpendiculaire à l'axe X. Les tailles de plots métalliques peuvent varier linéairement de 500 nm à 1500 nm par pas de 10 nm, et selon une pseudo période de $2,5 \mu m$.

Ce type d'architecture donne accès à une panoplie de spectres qui peuvent permettre de remonter à la concentration de différents gaz, dans la zone d'étendue spectrale, par traitement de signal.

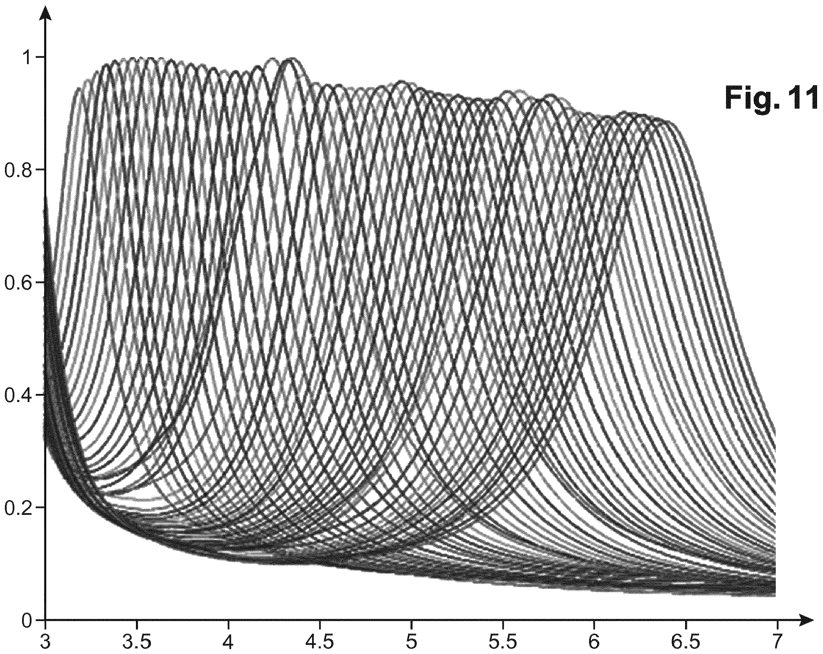

Les émissivités accessibles avec cette architecture sont représentées à la figure 11. En particulier, chacune des courbes de la figure 11 représente l'émissivité d'un ensemble émissif comprenant une rangée de plots métallique d'une taille donnée.

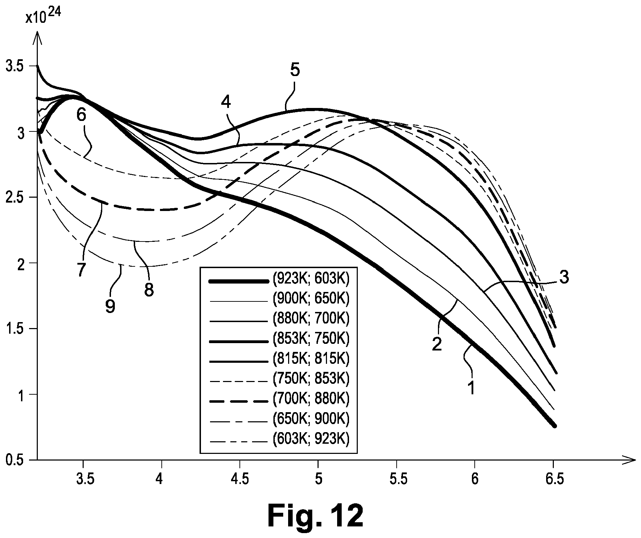

L'application de gradients de température, indiqués dans l'encart de la figure 12, permet d'avoir accès aux distributions spectrales représentées à la figure 12, et permettra par traitement de signal de remonter à la concentration de différents gaz, dont les raies d'absorption sont comprises entre $\lambda=3.3\mu m$ (ex :CH4) et $\lambda=6.15\mu m$ (ex :NO2).

**RÉFÉRENCES**

[1] Pierre Barritault et al., "Mid-IR source based on a free-standing microhotplate for autonomous CO2 sensing in indoor- applications", Sensors and Actuators A, 172, p. 379-385, (2011).

[2] Anthony Lefebvre et al., "Influence of emissivity tailoring on membranes thermal behavior for gas sensing applications", Sensor and Actuators B, 213, p. 53-58, (2015).

[3] Jean-Jacques Greffet et al., "Coherent émission of light by thermal sources", Nature, 416(6876), 61-64, (2002),

**Revendications**

1. Source de rayonnement infrarouge (100) comprenant une membrane, la membrane comprenant :

   - une couche émissive (130), comprenant une surface émissive (131), et destinée à émettre, lorsqu'elle est chauffée, un rayonnement infrarouge à partir de ladite surface émissive (131),
   - une pluralité de moyens d'adaptation (121a, 121b, 121c, 121d), chaque moyen d'adaptation (121a, 121b, 121c, 121d) étant en regard d'une section de la surface émissive (131) différente, dite section émissive (132a, 132b, 132c, 132d), et avec laquelle il forme un ensemble émissif (134a, 134b, 134c, 134d) adapté pour émettre un rayonnement infrarouge d'étendue spectrale réduite par rapport au rayonnement infrarouge susceptible d'être émis par la section émissive (132a, 132b, 132c, 132d) seule, et centrée autour d'une longueur d'onde centrale, ladite longueur d'onde centrale étant différente d'un ensemble émissif à l'autre,
   - une pluralité de moyens de chauffage (140a, 140b) de la couche émissive (130), les moyens de chauffage (140a, 140b) étant agencés de manière à imposer un gradient de température modulable à la couche émissive de manière à faire varier les distributions relatives en longueurs d'ondes du rayonnement effectivement émises par chacun des ensembles émissifs (134a, 134b, 134c, 134d).

2. Source selon la revendication 1, dans laquelle la couche émissive (130) repose, par une face opposée à la surface émissive (131), sur un support mécanique (160).

3. Source selon la revendication 2, dans laquelle dans laquelle la pluralité de moyens de chauffage (140a, 140b) comprend au moins deux pistes métalliques qui, lorsqu'elles sont traversées par un courant, s'échauffent.

4. Source selon la revendication 3, dans laquelle les deux pistes sont formées sur le support mécanique (160) et à distance de la couche émissive (130).

5. Source selon la revendication 3 ou 4, dans laquelle les deux pistes métalliques sont parallèles entre elles, et encadrent la surface émissive (131).

6. Source selon l'une des revendications 2 à 5, dans laquelle le support mécanique (160) est pourvu d'au moins deux pattes d'attache (161a, 161b, 161c, 161d), avantageusement au moins quatre pattes d'attache (161a, 161b, 161c, 161d).

7. Source selon la revendication 6 en combinaison avec la revendication 3, dans laquelle les pattes d'attache sont également pourvues d'amenées de courant (162a, 162b, 162c, 162d) destinées à alimenter en courant les pistes métalliques.

8. Source selon l'une des revendications 2 à 7, dans laquelle une couche diélectrique (150) présentant un indice de réfraction n et une épaisseur E est intercalée entre la pluralité moyens d'adaptation (121a, 121b, 121c, 121d) et la couche émissive (130).

9. Source selon la revendication 8, dans laquelle chaque moyen d'adaptation (121a, 121b, 121c, 121d) comprend au moins un plot métallique reposant sur la couche diélectrique (150), et dont la dimension w est un multiple entier de la longueur d'onde centrale associée à l'ensemble émissif (134a, 134b, 134c, 134d) considéré divisée par 2 fois l'indice de réfraction de la couche diélectrique à ladite longueur d'onde centrale.

10. Source selon la revendication 9, dans laquelle chaque moyen d'adaptation (121a, 121b, 121c, 121d) est espacé de la surface émissive (131) d'une distance inférieure au dixième de la longueur d'onde centrale associée à l'ensemble émissif (134a, 134b, 134c, 134d) considéré, et avantageusement supérieure au cinquantième de ladite longueur d'onde centrale.

11. Source selon la revendication 9, dans laquelle, pour chaque moyen d'adaptation (121a, 121b, 121c, 121d), l'au moins un plot métallique comprend une pluralité de plots métalliques (122a, 122b, 122c, 122d) agencés de manière matricielle.

12. Source selon la revendication 10, dans laquelle chaque moyen d'adaptation (121a, 121b, 121c, 121d) comprend le même nombre de plots métalliques (122a, 122b, 122c, 122d).

13. Source selon l'une des revendications 9 à 12, dans laquelle l'au moins un plot métallique comprend une espèce métallique choisi parmi : platine, Or, Argent, Titane, Nitrure de Titane, Tungstène, Palladium, Tantale, Cuivre, Aluminium, Palladium, Molybdène.

14. Source selon l'une des revendications 1 à 8, dans laquelle chaque moyen d'adaptation (121a, 121b, 121c, 121d) comprend un filtre optique, avantageusement un filtre interférentiel.

15. Source selon l'une des revendications 1 à 14, dans laquelle les moyens d'adaptation (121a, 121b, 121c, 121d) sont alignés selon une direction A.

16. Source selon l'une des revendications 1 à 15, dans laquelle la couche émissive (130) comprend une ou des tranchées traversantes (133) séparant les sections émissives (132a, 132b, 132c, 132d) les unes des autres.

17. Source selon l'une des revendications 1 à 16, dans laquelle la source de rayonnement infrarouge est disposée dans une enceinte dont l'environnement est maintenu à une pression inférieure à $10^{-2}$ mbar, préférentiellement comprise entre $10^{-3}$ mbar et $10^{-2}$ mbar.

18. Détecteur de gaz mettant en oeuvre la source de rayonnement infrarouge selon l'une des revendications 1 à 17.

**Fig. 1**

**Fig. 2**

**Fig. 3**

Fig. 4

Fig. 5

EP 3 470 804 A1

**Fig. 6a**

**Fig. 6b**

**Fig. 7a**

**Fig. 7b**

Fig. 8a

Fig. 8b

Fig. 8c

Fig. 8d

Fig. 8e

Fig. 8f

Fig. 8g

Fig. 8h

**Fig. 9**

**Fig. 10**

Fig. 11

Fig. 12

Europäisches
Patentamt

European
Patent Office

Office européen
des brevets

**RAPPORT DE RECHERCHE EUROPEENNE**

Numéro de la demande

EP 18 19 9664

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | Anthony Lefebvre: "Simulation et conception de microsources infrarouges nanophotoniques pour la détection de gaz", Thesis, 16 décembre 2015 (2015-12-16), pages 1-121, XP055484500, FR Extrait de l'Internet: URL:https://pastel.archives-ouvertes.fr/te l-01274342/document [extrait le 2018-06-14] * figures II-13, II-14, II-22, II-28, II-29, III-1, III-2 * ----- | 1-18 | INV. G01J3/10 G01J3/12 |
| X | WO 2017/132429 A1 (US GOV SEC NAVY [US]) 3 août 2017 (2017-08-03) | 1 | |
| Y | * figures 7A-7B * ----- | 1-18 | |
| A | LEFEBVRE ANTHONY ET AL: "Influence of emissivity tailoring on radiative membranes thermal behavior for gas sensing applications", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, vol. 213, 19 février 2015 (2015-02-19), pages 53-58, XP029124179, ISSN: 0925-4005, DOI: 10.1016/J.SNB.2015.02.056 * le document en entier * ----- | 1-18 | DOMAINES TECHNIQUES RECHERCHES (IPC) G01J |

Le présent rapport a été établi pour toutes les revendications

| Lieu de la recherche | Date d'achèvement de la recherche | Examinateur |
|---|---|---|
| Munich | 21 décembre 2018 | Parise, Berengere |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 19 9664

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-12-2018

| Document brevet cité au rapport de recherche | Date de publication | Membre(s) de la famille de brevet(s) | Date de publication |
|---|---|---|---|
| WO 2017132429 A1 | 03-08-2017 | US 2017221596 A1<br>WO 2017132429 A1 | 03-08-2017<br>03-08-2017 |

EPO FORM P0460

Pour tout renseignement concernant cette annexe : voir Journal Officiel de l'Office européen des brevets, No.12/82

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PIERRE BARRITAULT et al.** Mid-IR source based on a free-standing microhotplate for autonomous CO2 sensing in indoor- applications. *Sensors and Actuators A,* 2011, vol. 172, 379-385

- **ANTHONY LEFEBVRE et al.** Influence of emissivity tailoring on membranes thermal behavior for gas sensing applications. *Sensor and Actuators B,* 2015, vol. 213, 53-58
- **JEAN-JACQUES GREFFET et al.** Coherent émission of light by thermal sources. *Nature,* 2002, vol. 416 (6876), 61-64